# EUROPEAN PATENT APPLICATION

(11) **EP 1 582 842 A2**
(43) Date of publication of application: **05.10.2005**
(21) Application number: 05006594.5
(22) Date of filing: 24.03.2005
(51) Int. Cl.: G01C 21/34

(54) **Navigation apparatus, method, and program**

(30) Priority: 31.03.2004 JP 2004104942
(71) Applicant: AISIN AW CO., LTD., Anjo-shi, Aichi 444-1192 (JP)
(72) Inventor: Hiyokawa, Toyoji, Intell., Prop., Div., Okazaki-shi Aichi 444-8564 (JP); Aoyama, Shingo, Intell., Prop., Div., Okazaki-shi Aichi 444-8564 (JP); Shimazue, Mikio, Intell., Prop., Div., Okazaki-shi Aichi 444-8564 (JP)
(74) Representative: Kramer - Barske - Schmidtchen

(57) **Abstract**

Systems, methods, and programs for navigation guide to a destination along a searched route and receive road information and traffic information including traffic congestion information. If according to the received traffic congestion information, traffic congestion is detected on the guidance route, the systems, methods, and programs search a detour route to avoid such congestion. The systems, methods, and programs guide to a destination along the detour route. If traffic congestion which was previously avoided by the detour route is determined to have been eased, the systems, methods, and programs search for a new route and switches guidance from the detour route to the new route.

## Description

### INCORPORATION BY REFERENCE

The disclosure of Japanese Patent Application No. 2004-104942 filed on March 31, 2004 including the specification, drawings and abstract are incorporated herein by reference in their entirety.

### BACKGROUND OF THE INVENTION

### 1. Related Technical Fields

Related technical fields include navigation apparatus and methods that consider areas closed to vehicular traffic and/or or traffic.

### 2. Description of Related Art

A conventional navigation apparatus, such as described in Japanese Unexamined Patent Application Publication No. 2002-90167, searches a route to a destination and executes guidance along the searched route. The conventional apparatus receives DRGS (dynamic route guidance system) traffic information from an external base transceiver station such as VICS (vehicle information communication system). If information about, for example, an area closed to vehicular traffic, a crowded area, and/or a congested area (hereinafter referred to as traffic congestion information), is detected, the conventional apparatus automatically re-searches a route to find a detour route. In order to search for a detour route, the apparatus automatically activates DRGS. The DRGS allows a user to select either the searched detour route or the original guidance route.

### SUMMARY OF THE INVENTION

The aforementioned navigation apparatus automatically activates DRGS when traffic congestion information is received. Accordingly, the conventional apparatus automatically searches a new route, without first considering whether to guide along the original route in spite of the traffic congestion, and/or the like. Thus, even if the traffic congestion may be easing and the original route is acceptable or even preferable to a detour route, the conventional apparatus searches for the detour route.

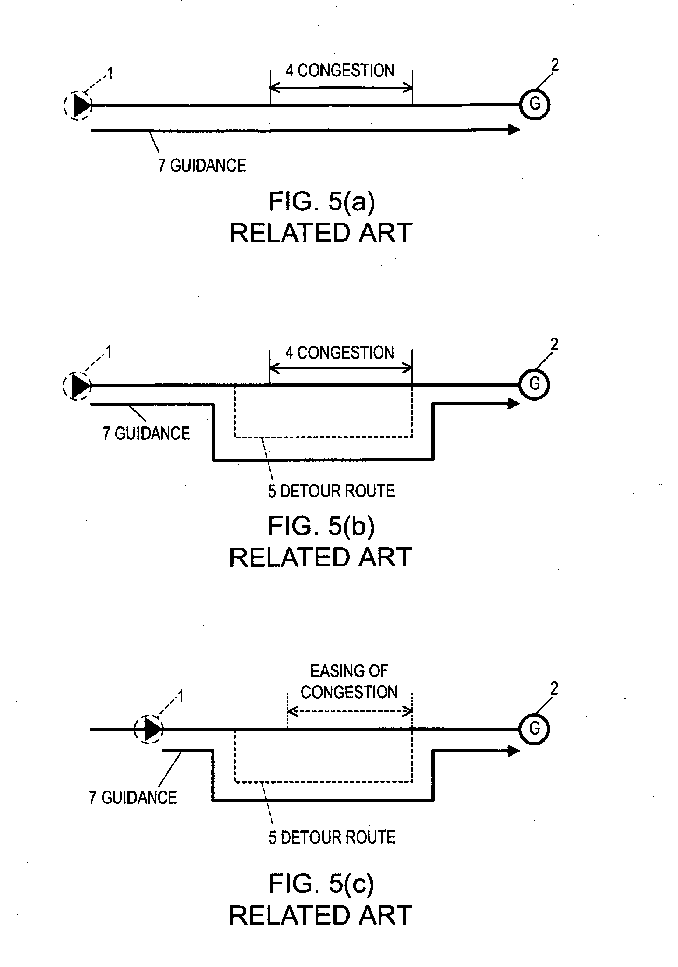

An example of this conventional method is shown in Fig.5. Fig. 5(a) shows a situation where traffic congestion 4 exists on a guidance route 3 that is from a current location 1 to a destination 2. If traffic co ngestion is detected, the conventional apparatus activates DRGS, and a detour route 5, avoiding traffic congestion 4 and indicated by a dotted line, is searched for avoiding traffic congestion 4. Then, guidance 7 along the detour is started as shown in Fig. 5 (b). However, as shown in Fig.5 (c), even if the traffic congestion 4 is eased during guiding along the detour route 5, guidance 7 along the detour route 5 is continued. The original route is unavailable as a guidance route regardless of whether the original route is preferable over the detour route in terms of, for example, time required and distance.

Thus, it is beneficial to provide a navigation apparatus capable of taking a flexible measure against incidence/easing of traffic congestion by, for example, allowing guidance along an original route when that route may be preferable to a detour route as a result of easing of traffic.

Accordingly, various exemplary implementations of the principles described herein provide a navigation apparatus including a controller. The controller guides to a destination along a searched route and receives road information and traffic information including traffic congestion information. If according to the received traffic congestion information, traffic congestion is detected on the guidance route, the controller searches a detour route to avoid such congestion. The controller guides to a destination along the detour route. If traffic congestion which was previously avoided by the detour route is determined to have been eased, the controller searches for a new route and switches guidance from the detour route to the new route.

Various exemplary implementations of the principles described herein provide a navigation method including guiding to a destination along a searched route and receiving road information and traffic information including traffic congestion information. The method includes searching, if according to the received traffic congestion information, traffic congestion is detected on the guidance route, a detour route to avoid such congestion, and guiding to a destination along the detour route. The method includes searching, if traffic congestion, which was previously avoided by the detour route, is determined to have been eased, for a new route, and switching guidance from the detour route to the new route.

Various exemplary implementations of the principles described herein provide a storage medium storing a set of program instructions executable on a data processing device and usable for navigation, the instructions including instructions for guiding to a destination along a searched route and instructions for receiving road information and traffic information including traffic congestion information. The instructions include instructions for searching, if according to the received traffic congestion information, traffic congestion is detected on the guidance route, a detour route to avoid such congestion, and instructions for guiding to a destination along the detour route. The instructions include instructions for searching, if traffic congestion, which was previously avoided by the detour route, is determined to have been eased, for a new route, and instructions for switching guidance from the detour route to the new route.

### BRIEF DESCRIPTION OF THE DRAWINGS

Exemplary implementations will now be described with reference to the accompanying drawings, wherein:

Fig. 1 is a diagram showing a navigation apparatus according to an exemplary implementation of the principles described herein;

Fig. 2 is a diagram showing a method of switching to a new route according to an exemplary implementation of the principles described herein;

Fig. 3 is a diagram showing a method of adjusting a route according to an exemplary implementation of the principles described herein;

Fig. 4 is a diagram showing method of searching a detour route and switching to a new route according to an exemplary implementation of the principles described herein; and

Fig. 5 is a diagram showing a processing by a conventional DRGS.

### DETAILED DESCRIPTION OF EXEMPLARY EMBODIMENTS

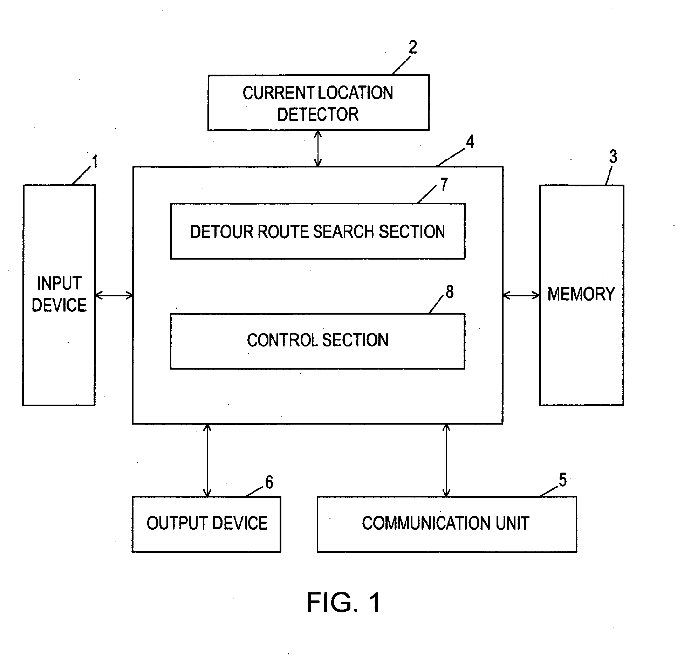

Fig. 1 shows an exemplary navigation apparatus. The navigation apparatus may include an input device 1 for inputting information relevant to route guidance, such as, for example, a place of departure and/or a destination. The navigation apparatus may include a current location detector 2 for detecting information relevant to the current location of the vehicle. The navigation apparatus may include a memory,3 that may store information, for example, in the form of data. Such data may include, for example, map data, navigation data necessary for searching for a route, and/or display/voice guidance data necessary for providing guidance along the route. The memory 3 may store information, for example, in the form of instructions, such as, for example, programs, applications, and/or OS. Such instructions may include, for example, instructions for displaying a map, searching for a route, and/or providing guidance such as voice guidance.

The navigation apparatus may include a controller 4, for example, for generating a map display, searching for a route, providing display/voice guidance, and/or controlling the navigation apparatus. The navigation apparatus may include a communication unit 5, for example, for transmitting and/or receiving information, such as, for example, road information and/or traffic information that may relate to the travel of a vehicle. The communication unit 5 may transmit and/or receive information such as information relevant to the current location of the vehicle. The navigation apparatus may include an output device 6 including, for example, a display and a speaker for outputting information relevant to rout e guidance.

The controller 4 may be physically, functionally, and/or conceptually divided into at least a detour route search section (e.g., a DRGS) 7 that may be activated and search a detour route when traffic congestion information is received by the communication unit 5, and a control section 8 that, provided 1) a new route is searched by the detour route search section, 2) traffic congestion information previously avoided is detected on the new route, and/or 3) the traffic congestion has been eased at that time, may switch the detour route to the new route. The control section 8 may store traffic congestion information generated on a guidance route and, when the guidance route is switched to a new route, may remove stored traffic congestion information from the new route.

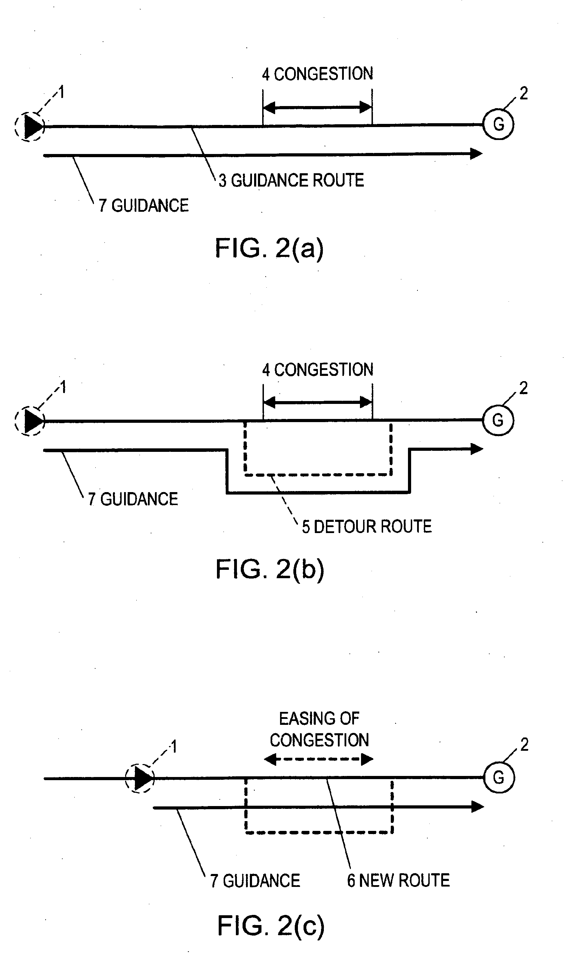

Fig. 2 shows an exemplary method of switching to a new route, for example, which is searched by DRGS. Fig.2(a) shows traffic congestion 4 existing on a guidance route 3 from a current location 1 to a destination 2. DRGS may be activated when the traffic congestion is detected, and may search a detour route 5 indicated by a dotted line to avoid traffic congestion 4, switch the guidance 6 to the detour route 5 (Fig. 2 (b)). Next, DRGS may be activated again when it is detected that the traffic congestion 4 has eased during guidance along the detour route 5. Provided that a new route 6 is detected and that easing traffic congestion 4 on the guidance route 3 is also detected on the new route 6, guidance 7 may be switched from the detour route 5 to the new route 6 (Fig. 2 (c)).

Note that, data re lating to traffic congestion 4, which was on the guidance route 3 when switching guidance 7 to the detour route 5, may be stored in the memory 3 or the controller 4 of the navigation apparatus. The control section 8 may determine by using the stored information whether the traffic congestion 4 is on the new route 6, so that the traffic congestion data 4 may be removed from the new route 6 when changing guidance 7 from the detour route 5 to the new route 6. If traffic congestion information data is not found on the new route 6, such data may be stored for a next detection of switching.

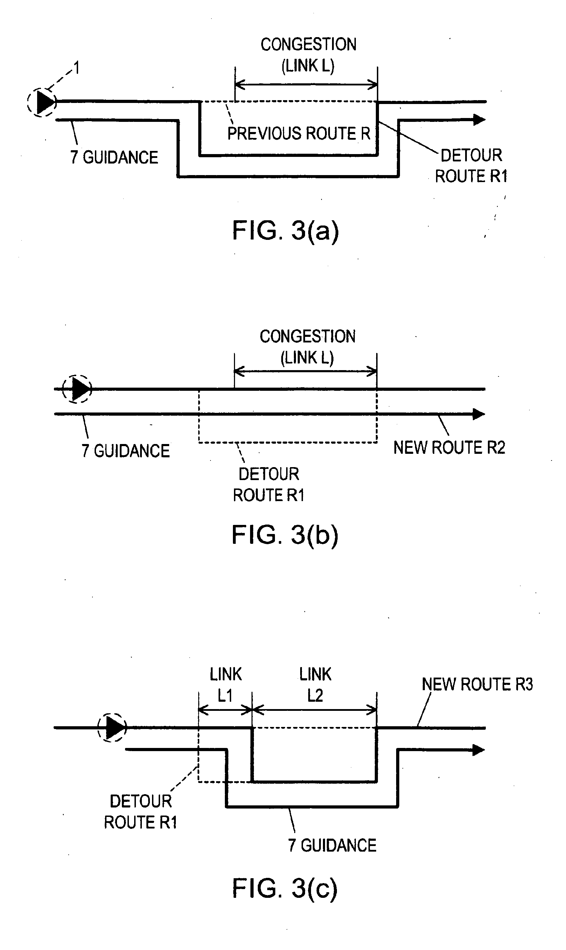

Next, an exemplary method of switching to a new route, for example, by removing and updating of a link including traffic congestion area, will be described with reference to Fig. 3. As shown in Fig. 3 (a), for example, DRGS may be activated to search a detour route R1 for avoiding a link L including traffic congestion area on a previous route R and switch the guidance route to the detour route R1. In this manner, information relevant to the link L including the traffic congestion area on the previous route R may be stored for a next time when DRGS is activated to switch a route.

As used herein, the term link refers to, for example, a road or por tion of a road. For example, according to one type of road data, each road may consist of a plurality of componential units called links. Each link may be separated and defined by, for example, an intersection, an intersection having more than three roads, a curve, and/or a point at which the road type changes.

As shown in Fig. 3 (b) traffic congestion on the previous route R has eased during traveling on the detour route R1. Thus, DRGS is activated to search a new route R2. Guidance 7 is switched to the new route R2 because the link L including the eased traffic congestion area on the previous route R is also detected on the new route R2. In this case, the link L including traffic congestion on the previous route R may be removed from the new route R2 at this moment.

Fig. 3 (c) shows a situation where traffic congestion on the previous route R is eased during traveling on the detour route R1 and DRGS is activated to search a new route R3. In this example, the link L including traffic congestion area may consist of a link L1 and a link L2, and only the traffic congestion for link L1 is eased. Thus, link L1 is included on the new route R3. That is, the link L2 including remaining traffic congestion in an area on the previous route R is not included on the new route R3. Then guidance 7 may be switched to the new route R3 because the traffic congestion on link L1, including a portion of the traffic congestion area on the previous route R, is eased. Thus, the congestion information for link L1 may be removed from the new route R3 because the link L1 includes traffic congestion on the previous route R, the congestion information for link L2 may be kept for the next time when DRGS is activated to switch a route because the link L2 including traffic congestion on the previous route R does not exist on the new route R3.

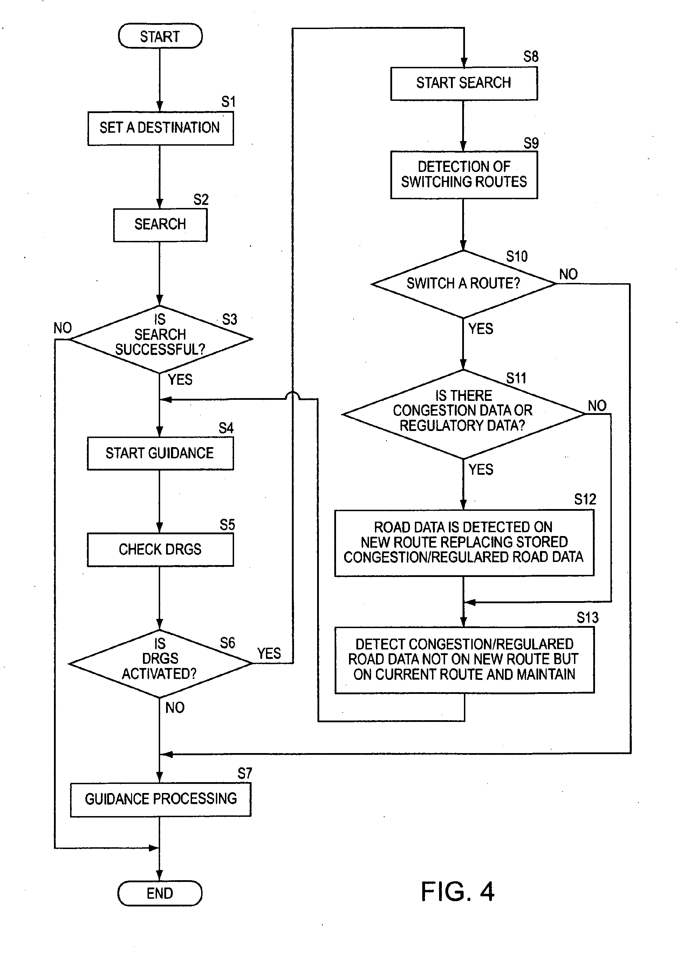

Next, an exemplary method of searching a detour route and sw itching to a new route, for example, by DRGS will be described with reference to Fig. 4. As shown in Fig. 4, a destination is set (Step S1), a route to the destination is searched (Step S2), and after successful searching (Step S3 = Yes), guidance along the searched route is started (Step S4). Subsequently, DRGS is checked (Step S5). Note that, although DRGS is activated when receiving information relevant to traffic congestion and the like, DRGS is again activated when information relevant to easing of traffic congestion on the previous route is received during traveling the detour route.

If information relevant to easing of traffic congestion on the previous route is not received (Step S6 = No), DRGS is no t activated and guidance along the searched route is continued (Step S7). If information relevant to easing of traffic congestion on the previous route is received (Step S6 = Yes), DRGS is activated to search a new route (Step S8). Next, routes eligible for switching are detected (Step S9). According to this example, switching routes may be executed under the right conditions, that is, whether traffic congestion on the original route, for which guidance was provided before switching is now on the new route (Step S9). If the conditions relating to switching are not met (Step S10 = NO), the method is terminated.

If the conditions are met (Step S10 = YES), it is further determined whether congestion/regulated road data has been maintained (Step S11). If data has been maintained (Step S11 = Yes), current road (or link) data for the new route is detected to replace the maintained congestion/regulated road data (Step S12). Subsequently, congestion/regulated road data, which is not on the new route but on the current guidance route, is detected and maintained. Then, guidance is continued based on the resulting congestion/regulated road (link) data (Step S4). The process may be repeated each time the DRGS is activated until the destination is reached.

Note that as described above, it is determined whether information regarding easing of traffic congestion on a previous route which was taken before is received during traveling on the current detour route. However, according to various other exemplary implementations, that detection may be performed when detecting routes eligible for switching.

While various features have been described in conjunction with the examples outlined above various alternatives, modifications, variations, and/or improvements of those features and/or examples may be possible. Accordingly, the examples, as set forth above, are intended to be illustrativ. Various changes may be made without departing from the broad spirit and scope of the underlying principles.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus, comprising
a controller (4) that is adapted to
- guide to a destination (2) along a searched route (3, R),
- receive road information and traffic information including traffic congestion information,
- search, if according to the received traffic congestion information, traffic congestion (4) is detected on the guidance route, a detour route (5, R1) to avoid such congestion (4),
- guide to a destination (2) along the detour route (5, R1), and
- search, if traffic congestion which was previously avoided by the detour route is determined to have been eased, for a new route (6, R2, R3), and
- switch guidance from the detour route (5, R1) to the new route (6, R2, R3).

2. The navigation apparatus of claim 1, wherein the controller is adapted to store traffic congestion information generated on the guidance route, and when guidance route is switched to the new route, remove stored traffic congestion information which exists on the new route.

3. The navigation apparatus of claim 1 or 2, wherein
the searched route includes a plurality of links (L, L1, L2), and
the controller is adapted to search, if at least a portion of the traffic congestion which was previously avoided by the detour route (R) is determined to have been eased, for the new route (R2, R3) by taking into consideration at least those links (L1) of the searched route for which traffic congestion is determined to have been eased.

4. The navigation apparatus of one of claims 1 to 3, wherein the controller is adapted to automatically search, if according to the received traffic congestion information, the traffic congestion is detected on the guidance route, the detour route to avoid such congestion.

5. The navigation apparatus of one of claims 1 to 4, wherein the controller is adapted to automatically search, if the traffic congestion which was previously avoided by the detour route is determined to have been eased, for the new route.

6. A navigation method, comprising:
- guiding to a destination (2) along a searched route (3, R);
- receiving road information and traffic information including traffic congestion information;
- searching, if according to the received traffic congestion information, traffic congestion (4) is detected on the guidance route (3, R), a detour route (5, R1) to avoid such congestion (4);
- guiding to a destination (2) along the detour route (5, R1); and
- searching, if traffic congestion which was previously avoided by the detour route is determined to have been eased, for a new route (6, R2, R3); and
- switching guidance from the detour route (5, R1) to the new route (6, R2, R3).

7. The navigation method of claim 6, further comprising:
- storing traffic congestion information generated on the guidance route; and
- removing, when guidance route is switched to the new route, stored traffic congestion information which exists on the new route.

8. The navigation method of claim 6 or 7, wherein
the searched route includes a plurality of links (L, L1, L2), and
searching the new route (R2, R3) comprises searching, if at least a portion of the traffic congestion which was previously avoided by the detour route (R1) is determined to have been eased, for the new route (R2, R3) by taking into consideration at least those links (L1) of the searched route for which traffic congestion is determined to have been eased.

9. The navigation method of one of claims 6 to 8, wherein
searching for the detour route comprises automatically searching, if according to the received traffic congestion information, the traffic congestion is detected on the guidance route, the detour route to avoid such congestion.

10. The navigation apparatus of one of claims 6 to 9, wherein
searching for the new route comprises automatically searching, if the traffic congestion which was previously avoided by the detour route is determined to have been eased, for the new route.

11. A set of program instructions which, when executed on a correspondingly programmed data processing device, performs the steps of a method according to one of claims 6 to 10.

12. A storage medium storing a set of program instructions according to claim 11.
